# EUROPEAN PATENT APPLICATION

(11) **EP 3 955 050 A1**
(43) Date of publication of application: **16.02.2022**
(21) Application number: 20190235.0
(22) Date of filing: 10.08.2020
(51) Int. Cl.: G02B 30/56, G06F 3/16, H04R 1/02

(54) **SMART SPEAKER WITH A HOLOGRAM PROJECTOR**

(71) Applicant: BSH Hausgeräte GmbH, 81739 München (DE)
(72) Inventor: Sagoo, Kiran Pal, 82256 Fürstenfeldbruck (DE)

(57) **Abstract**

A smart speaker (100) comprising a main body (106) with at least one loudspeaker (108), wherein the main body (106) extends along a longitudinal axis which is parallel to a ground that the smart speaker (100) stands on when the smart speaker is deployed. Furthermore, the smart speaker (100) comprises a rear foot plate (111) extending downwards along a rear foot axis from the main body (106) towards the ground that the smart speaker (100) stands on when the smart speaker is deployed; wherein the rear foot plate (111) lies within a plane defined by the longitudinal axis and the rear foot axis. In addition, the smart speaker (100) comprises a hologram projector (210) comprising a display (203) and a holographic plate (201), wherein the holographic plate (201) is configured to generate a hologram (200) based on an image (205) that is output on the display (203), and wherein the holographic plate (201) is aligned with the rear foot plate (111).

## Description

The present document relates to a smart speaker which may be used within a household, notably within a kitchen, e.g. to provide support for cooking.

A smart speaker may be used within a household, notably within a kitchen, to provide support for a household task, such as cooking, to a user of the smart speaker. The user may use the smart speaker for rending music and/or an audio signal, which is provided by a separate electronic device, such as a tablet PC or a smartphone.

The present document addresses the technical problem of increasing the comfort of use of a smart speaker. In particular, the present document addresses the technical problem of providing a compact smart speaker with image and/or video rendering. The technical problem is solved by the independent claim. Preferred examples are described in the dependent claims.

According to an aspect, a speaker, notably a smart speaker, which comprises a main body with at least one loudspeaker is described. The main body extends along a longitudinal axis which is parallel to the ground that the smart speaker stands on when the smart speaker is deployed. The main body may have the form of a cylinder, notably a circular cylinder, around the longitudinal axis. The loudspeaker may be located at a base of the cylinder. By way of example, the main body may extend between 10cm and 25cm along the longitudinal axis, and/or the main body may exhibit a diameter between 4cm and 8cm. The smart speaker comprises a main body which may have the function of a (cylindrical) acoustic chamber, thereby providing high quality audio output.

The smart speaker further comprises a rear foot plate which extends downwards along a rear foot axis from the main body towards the ground that the smart speaker stands on when the smart speaker is deployed. In particular, the rear foot plate may be attached to the main body at one side and may touch ground at the other side, thereby allowing the smart speaker to be placed in a stable manner onto the ground. The rear foot plate may lie within the plane defined by the longitudinal axis and the rear foot axis.

In addition, the smart speaker comprises a hologram projector which comprises a display and a holographic plate, wherein the holographic plate is configured to generate a hologram based on an image (notably a video) that is output on or by the display. In particular, the holographic plate may be configured to generate the hologram in an area above the holographic plate at the far side of the holographic plate with respect to the ground that the smart speaker stands on when it is deployed.

The holographic plate may be aligned with the rear foot plate. In particular, the holographic plate may be integrated within the rear foot plate.

Hence, a smart speaker is described, which makes use of the rear foot plate of the smart speaker as a holographic plate for generating a hologram above the holographic plate. As a result of this, a compact smart speaker with image and/or video output is provided.

The display may be aligned with a display axis, and the holographic plate may be aligned with the rear foot axis. The display axis and the rear foot axis may form a projection angle, wherein the projection angle may lie between 35° and 55°. By doing this, the hologram may be generated in a reliable manner. Furthermore, the display may be located in a compact manner within the smart speaker. In particular, the display may be located between the rear foot plate and the ground that the smart speaker stands on when it is deployed (notably within a housing of the smart speaker which is located below the rear foot plate).

The rear foot axis may form an angle with the ground between 20° and 45°. In other words, the rear foot axis may rise from ground towards the main body of the smart speaker at an angle between 20° and 45°. As a result of this, a hologram may be generated above the holographic plate, which can be viewed by a user in a comfortable manner.

The hologram projector may comprise a lens plate which is arranged in parallel to the display between the holographic plate and the display. The lens plate may be configured to map the image from the display onto the holographic plate. By making use of a lens plate, the size of the display may be reduced, thereby providing a particularly compact smart speaker.

The smart speaker may comprise a control unit (e.g. a microcontroller). The control unit may be configured to determine an audio and/or image signal (notably a video signal). Furthermore, the control unit may be configured to cause the audio signal to be rendered by the loudspeaker and/or to cause the image signal to be rendered by the display.

In particular, the control unit may be configured to receive an image signal, notably a video signal, from an electronic device via a (wireless) communication interface of the smart speaker (such as a WLAN or Bluetooth interface). The electronic device may be a tablet PC or a smartphone of a user of the smart speaker. Furthermore, the control unit may be configured to cause the image signal, notably the video signal, to be rendered by the display to output a hologram which corresponds to the image signal, notably to the video signal. Hence, the smart speaker may be configured to enable a user to stream a video as a hologram. As a result of this, the comfort of use of the smart speaker may be increased.

The smart speaker may comprise a front foot plate which extends downwards along a front foot axis from the main body towards the ground that the smart speaker stands on when it is deployed. The front foot plate may lie within a plane defined by the longitudinal axis and the front foot axis. By providing an additional front foot plate, the stability of the smart speaker may be increased. Furthermore, the display may be located between the rear foot plate and the front foot plate in a compact and secure manner.

The smart speaker may comprise a gesture sensor, notably located at the main body, which is configured to sense gesture data regarding a gesture performed by a user of the smart speaker. The control unit may be configured to control rendering of a hologram in dependence on the gesture data, thereby further increasing the comfort of use of the smart speaker.

It should be noted that the methods and systems including its preferred embodiments as outlined in the present document may be used stand-alone or in combination with the other methods and systems disclosed in this document. In addition, the features outlined in the context of a system are also applicable to a corresponding method. Furthermore, all aspects of the methods and systems outlined in the present document may be arbitrarily combined. In particular, the features of the claims may be combined with one another in an arbitrary manner.

The invention is explained below in an exemplary manner with reference to the accompanying drawings, wherein
Figure 1a shows an example smart speaker with a docking station function;
Figure 1b shows an example smart speaker in a side view;
Figures 2a to 2d illustrate an example smart speaker with a hologram projector; and
Figure 2e shows an example hologram projector.

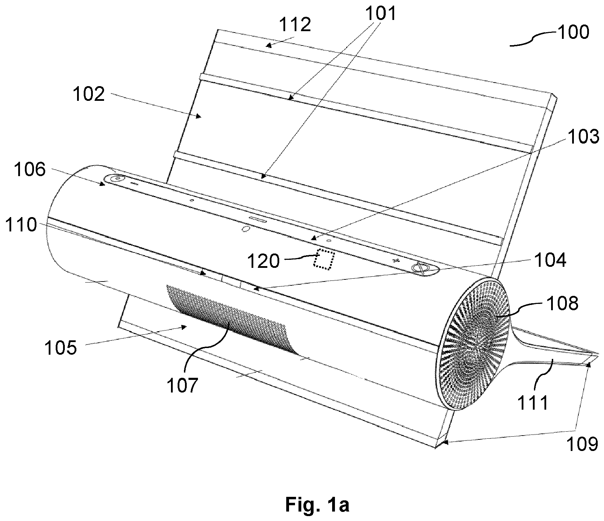

As outlined above, the present document is directed at increasing the comfort of use of a smart speaker, which may have the function of a docking station that is coupled to an electronic device, such as a smartphone or tablet PC. In this context, Fig. 1a shows an example smart speaker, notably a docking station, 100. The smart speaker 100 comprises a main chamber or main body 106, which may have a cylindrical form as illustrated in Fig. 1a. The main body 106 may comprise one or more electronic components such as a control unit 120, e.g. a microcontroller, of the smart speaker 100. Furthermore, the main body 106 may comprise a control panel 103 with one or more control elements, notably control buttons. The control panel 103 may enable a user to interact with the smart speaker 100.

Alternatively, or in addition to a control panel 103, the smart speaker 100 may comprise a gesture sensor 104 (located e.g. on the main body 106), which is configured to sense gesture data regarding a (hand) gesture performed by a user of the smart speaker 100. The smart speaker 100 may then be controlled in dependence of the gesture data. In addition, the smart speaker 100 may comprise one or more light elements 110, notably light emitting diodes (LED), e.g. for providing status information regarding the status of the smart speaker 100 to a user of the smart speaker 100.

The main body 106 may further comprise one or more loudspeakers 108 which are configured to emit an audio signal. The one or more loudspeakers 108 may be located at a face side of the (cylindrical) main body 106. The main body 106 may act as an acoustic chamber for improving the sound quality of the one or more loudspeakers 108. In addition, the smart speaker 100 may comprise a (passive) acoustic radiator 107 on the (cylindrical) surface of the main body 106, preferably facing the user of the smart speaker 100.

The smart speaker 100 may comprise one or more base feet 105, 111, notably a base foot 105 at a front side facing the user and/or a rear foot 111 at a rear side of the smart speaker 100. The one or more base feet 105, 111 may be attached to the main body 106, and may extend from the main body 106 towards the ground, on which the smart speaker 100 is placed. The one or more base feet 105, 111 may extend along the longitudinal axis of the (cylindrical) main body 106. In particular, the feet 105, 111 may have the form of a plate. As such the feet 105, 111 may be referred to herein as foot plates.

The one or more base feet 105, 111 may each comprise an isolator element 109, e.g. comprising silicone, at the end which is in contact with the ground that the smart speaker 100 is placed on. The use of an isolator element 109 allows the smart speaker 100 to be placed in a stable manner. Furthermore, the smart speaker 100 may be isolated against vibrations.

In addition, the smart speaker 100 may comprise a back support 102 which extends from the main body 106 upwards (i.e. away from the ground that the smart speaker 100 is placed on). The back support 102 may exhibit an angle with regards to the ground between 45° and 75°, when the smart speaker 100 is placed on the ground. The back support 102 may be designed as a support for a typical tablet PC (e.g. with a screen size between 8 inch and 13 inch). The back support 102 may extend along the longitudinal axis of the main body 106 (from one end to the other end of the main body 106).

The back support 102 may exhibit one or more isolator stripes 101 which may extend horizontally across the back support 102. Furthermore, the back support 102 may comprise an isolator section 112 at the top end of the back support 102. The use of isolator stripes 101 and/or of an isolator section 112 allows an object, such as a tablet PC, to be placed onto the back support 102 in a stable manner. Furthermore, isolation of vibrations may be provided.

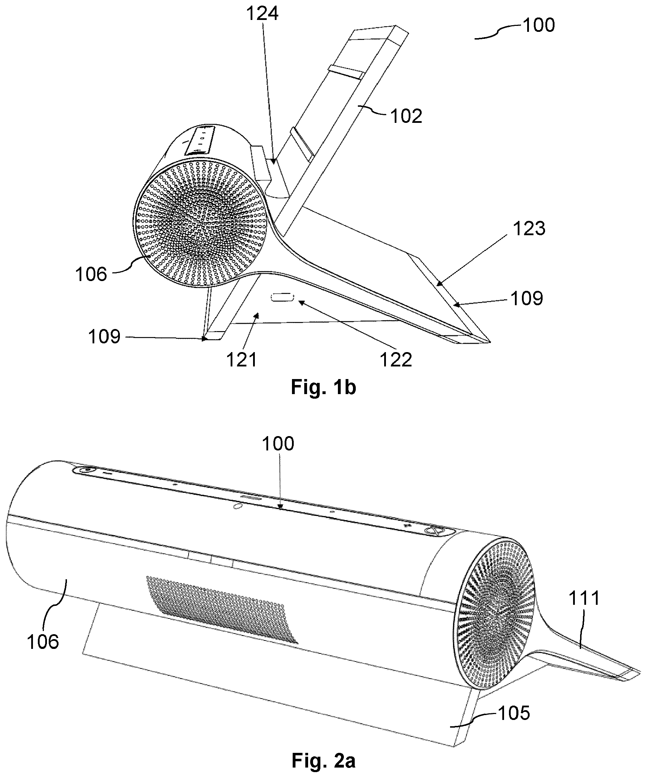

In addition, the smart speaker 100 may comprise a base support 124, as shown in Fig. 1b, which is located at the contact point between the main body 106 and the back support 102. The base support 124 may form a gap within which the lower edge of an electronic device, notably of a tablet PC, may be placed, in order to hold the electronic device in a stable manner on the back support 102. The base support 124 may comprise an isolating material, in order to allow vibrations of the smart speaker 100 (e.g. due to rending of an audio signal via a loudspeaker 108 of the smart speaker 100) to be isolated.

Figure 1b shows a side view of the smart speaker 100. The smart speaker 100 may comprise a housing 121 for one or more electronic components (e.g. for the control unit 120). The housing 121 may be located between the front foot 105 and the rear foot 111 of the smart speaker 100. The housing 121 may be part of the main body 106 of the smart speaker 100. Furthermore, the smart speaker 100 may comprise a data and/or power interface 122 (e.g. a USB-C interface) for data communication and/or for power supply. In addition, the smart speaker 100 may comprise a section 123 for placing a power cord for a power supply of the smart speaker 100.

The smart speaker 100 shown in Figures 1a and 1b exhibits a relatively large size, and requires a relatively large packaging, notably due to the back support 102 which extends in an upward direction from the main body 106. As indicated above, the back support 102 may be used for placing an electronic device onto the smart speaker 100 such that the display of the electronic device may be viewed in a comfortable manner by a user of the smart speaker 100. In the present document a smart speaker 100 comprising a holographic projector for image rendering is described, thereby removing the need of a back support 102.

The smart speaker 100 may be coupled with an electronic device via a (wireless) data communication interface, such as WLAN or Bluetooth. The control unit 120 of the smart speaker 100 may receive data, notably an audio signal and/or a video signal, via the data communication interface. Furthermore, the smart speaker 100 may be configured to render the data. In particular, an audio signal may be rendered by the one or more loudspeakers 108 of the smart speaker. Furthermore, a video signal may be rendered by a hologram or holographic projector of the smart speaker 100, as illustrated in the Figures 2a to 2e. By making use of a hologram projector, the back support 102 may be removed from the smart speaker 100, thereby reducing the size of the smart speaker 100.

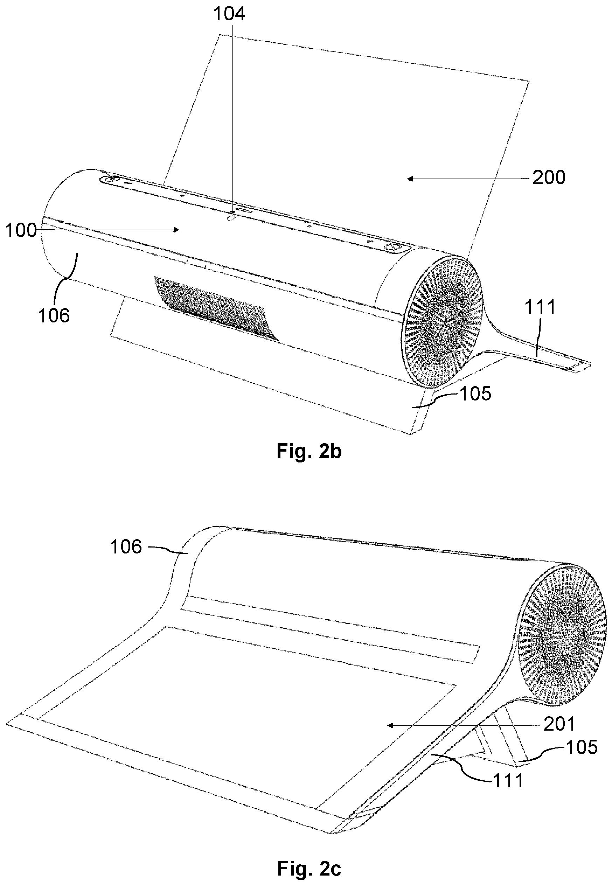

Fig. 2a shows a perspective view of a smart speaker 100 without a back support 102 for placing an electronic device. The smart speaker 100 comprises a hologram projector 210 which is configured to project a hologram 200 into an upward direction from the main body 106. In particular, the hologram projector 210 may be configured to project a hologram 200 into the plane which was previously occupied by the back support 102, as illustrated in Fig. 2b. In yet other words, the hologram 200 may be projected at a position, at which the user would have seen the display of an electronic device placed on the back support 102.

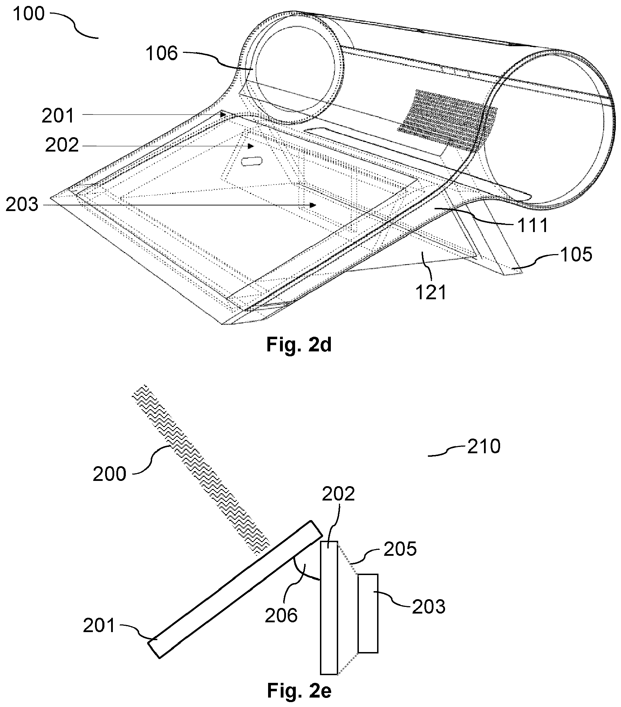

Figures 2d and 2e illustrate an example hologram projector 210. In particular, Fig. 2e shows a block diagram of the different components of a hologram projector 210 from the side, and Fig. 2d shows a perspective view of the different components of a hologram projector 210. The hologram projector 210 comprises a display 203 which is configured to display an image 205 (e.g. an image from a video signal provided by an electronic device). The image 205 may be projected onto a 3D hologram plate 201 (also referred to as a holographic plate) using a lens plate 202 (for resizing the image 205). The 3D hologram plate 201 may be configured to generate the hologram 200 based on the resized image 205.

As illustrated in Figs. 2c and 2d, the 3D hologram plate 201 may be integrated within the rear foot plate 111 which extends from the main body 106 towards the ground that the smart speaker 100 stands on when it is deployed. The rear foot plate 111, and by consequence the 3D hologram plate 201, may rise from ground towards the main body 106 at an angle between 20° and 45°. As a result of this, the hologram 200 may be projected upward at an angle between 45° and 70° relative to the ground that the smart speaker 100 stands on when the smart speaker is deployed. The lens plate 202 and the display 203 may be arranged at a defined angle 206 with respect to the 3D hologram plate 201 (notably an angle of 45°). The lens plate 202 and the display 203 may be parallel to one another and may be located within the housing 121 of the smart speaker 100 between the 3D hologram plate 201 and the ground that the smart speaker 100 stands on when the smart speaker is deployed. Hence, the components 201, 202, 203 of the hologram projector 210 may be integrated in an efficient and compact manner into the smart speaker 100.

In other words, a smart speaker 100 which is configured to generate a hologram 200 is described (e.g. as part of a graphical user interface, GUI, of the smart speaker 100). The smart speaker 100 comprises a holo 3D plate 201, a relatively small LCD display 203 (compared to the hologram plate 201) and a lens plate 202. The hologram 200 may be used to output graphical information, such as a GUI. The smart speaker 100 may be configured to allow user interaction via voice input and/or gesture input. The hologram projector 210 is configured to zoom in the image 205 from a relatively small display 203 with the help of a lens plate 202 which may have the same size as the 3D plate 201. The lens plate 202 may be configured to create the 3D hologram 200 in combination with the 3D plate 201.

In yet other words, a smart speaker 100 comprising a hologram projector 210 is described. The hologram projector 210 comprises a lens plate 202 and a 3D holo plate 201, which are arranged at an angle 206 of preferably 45° to each other. The micro display 203 is placed in parallel to the lens plate 202 and also at an angle 206 of preferably 45° to the 3D holo plate 201. The image 205 from the micro display 203 may be zoomed in with the help of the lens plate 202, and the image from the lens plate 202 may be reflected onto the 3D holo plate 201, which in turn creates the hologram 200. The 3D holo plate 201 may be integrated in an efficient manner into the rear foot 111 of the smart speaker 100. The smart speaker 100 may comprise a gesture sensor 104 for enabling a user interaction with the smart speaker 100 using gestures. The gesture sensor 104 may especially allow to locate at which position the user tries to touch the hologram 200, thereby allowing an interaction with the hologram 200 as if it were a touch-sensitive display.

The smart speaker 100 which is described herein may provide audio and video rendering in a compact manner.

It should be noted that the description and drawings merely illustrate the principles of the proposed methods and systems. Those skilled in the art will be able to implement various arrangements that, although not explicitly described or shown herein, embody the principles of the invention and are included within its spirit and scope. Furthermore, all examples and embodiment outlined in the present document are principally intended expressly to be only for explanatory purposes to help the reader in understanding the principles of the proposed methods and systems. Furthermore, all statements herein providing principles, aspects, and embodiments of the invention, as well as specific examples thereof, are intended to encompass equivalents thereof.

## Claims

1. A smart speaker (100) comprising
- a main body (106) with at least one loudspeaker (108); wherein the main body (106) extends along a longitudinal axis which is parallel to a ground that the smart speaker (100) stands on when the smart speaker is deployed;
- a rear foot plate (111) extending downwards along a rear foot axis from the main body (106) towards the ground that the smart speaker (100) stands on when the smart speaker is deployed; wherein the rear foot plate (111) lies within a plane defined by the longitudinal axis and the rear foot axis; and
- a hologram projector (210) comprising a display (203) and a holographic plate (201); wherein the holographic plate (201) is configured to generate a hologram (200) based on an image (205) that is output on the display (203); wherein the holographic plate (201) is aligned with the rear foot plate (111).

2. The smart speaker (100) of claim 1, wherein the holographic plate (201) is integrated within the rear foot plate (111).

3. The smart speaker (100) of any previous claims, wherein
- the display (203) is aligned with a display axis;
- the holographic plate (201) is aligned with the rear foot axis;
- the display axis and the rear foot axis form a projection angle (206); and
- the projection angle (206) lies between 35° and 55°.

4. The smart speaker (100) of any previous claims, wherein the display (203) is located, notably within a housing (121) of the smart speaker (100), between the rear foot plate (111) and the ground that the smart speaker (100) stands on when the smart speaker is deployed.

5. The smart speaker (100) of any previous claims, wherein the holographic plate (201) is configured to generate the hologram (200) in an area above the holographic plate (201) at a far side of the holographic plate (201) with respect to the ground that the smart speaker (100) stands on when the smart speaker is deployed.

6. The smart speaker (100) of any previous claims, wherein the rear foot axis forms an angle with the ground that the smart speaker (100) stands on between 20° and 45°.

7. The smart speaker (100) of any previous claims, wherein
- the hologram projector (210) comprises a lens plate (202) which is arranged in parallel to the display (203) between the holographic plate (201) and the display (203); and
- the lens plate (202) is configured to map the image (205) from the display (203) onto the holographic plate (201).

8. The smart speaker (100) of any previous claims, wherein
- the smart speaker (100) comprises a control unit (120); and
- the control unit (120) is configured to
- determine an audio and/or image signal; and
- cause the audio signal to be rendered by the loudspeaker (108) and/or cause the image signal to be rendered by the display (203).

9. The smart speaker (100) of claim 8, wherein the control unit (120) is configured to
- receive the image signal, notably a video signal, from an electronic device via a communication interface of the smart speaker (100); and
- cause the image signal, notably the video signal, to be rendered by the display (203) to output a hologram (200) which corresponds to the image signal, notably to the video signal.

10. The smart speaker (100) of any previous claims, wherein
- the main body (106) forms a cylinder, notably a circular cylinder, around the longitudinal axis; and/or
- the main body (106) extends between 10cm and 25cm along the longitudinal axis; and/or
- the main body (106) exhibits a diameter between 4cm and 8cm; and/or
- the loudspeaker (108) is located at a base of the cylinder.

11. The smart speaker (100) of any previous claims, wherein
- the smart speaker (100) comprises a front foot plate (105) extending downwards along a front foot axis from the main body (106) towards the ground that the smart speaker (100) stands on when the smart speaker is deployed; wherein the front foot plate (105) lies within a plane defined by the longitudinal axis and the front foot axis; and
- the display (203) is located between the rear foot plate (111) and the front foot plate (105).

12. The smart speaker (100) of any previous claims, wherein the smart speaker (100) comprises
- a gesture sensor (104), notably located at the main body (106), configured to sense gesture data regarding a gesture performed by a user of the smart speaker (100); and
- a control unit (120) configured to control rendering of a hologram (200) in dependence on the gesture data.

## Amended claims

### Amended claims in accordance with Rule 137(2) EPC.

1. A smart speaker (100) comprising
- a main body (106) with at least one loudspeaker (108); wherein the main body (106) extends along a longitudinal axis which is parallel to a ground that the smart speaker (100) stands on when the smart speaker is deployed;
- a rear foot plate (111) extending downwards along a rear foot axis from the main body (106) towards the ground that the smart speaker (100) stands on when the smart speaker is deployed; wherein the rear foot plate (111) lies within a plane defined by the longitudinal axis and the rear foot axis; and
- a hologram projector (210) comprising a display (203) and a holographic plate (201); wherein the holographic plate (201) is configured to generate a hologram (200) based on an image (205) that is output on the display (203); wherein the holographic plate (201) is aligned with the rear foot plate (111);
**characterized in that**
- the holographic plate (201) is configured to generate the hologram (200) in an area above the holographic plate (201) at a far side of the holographic plate (201) with respect to the ground that the smart speaker (100) stands on when the smart speaker is deployed.

2. The smart speaker (100) of claim 1, wherein the holographic plate (201) is integrated within the rear foot plate (111).

3. The smart speaker (100) of any previous claims, wherein
- the display (203) is aligned with a display axis;
- the holographic plate (201) is aligned with the rear foot axis;
- the display axis and the rear foot axis form a projection angle (206); and
- the projection angle (206) lies between 35° and 55°.

4. The smart speaker (100) of any previous claims, wherein the display (203) is located, notably within a housing (121) of the smart speaker (100), between the rear foot plate (111) and the ground that the smart speaker (100) stands on when the smart speaker is deployed.

5. The smart speaker (100) of any previous claims, wherein the rear foot axis forms an angle with the ground that the smart speaker (100) stands on between 20° and 45°.

6. The smart speaker (100) of any previous claims, wherein
- the hologram projector (210) comprises a lens plate (202) which is arranged in parallel to the display (203) between the holographic plate (201) and the display (203); and
- the lens plate (202) is configured to map the image (205) from the display (203) onto the holographic plate (201).

7. The smart speaker (100) of any previous claims, wherein
- the smart speaker (100) comprises a control unit (120); and
- the control unit (120) is configured to
- determine an audio and/or image signal; and
- cause the audio signal to be rendered by the loudspeaker (108) and/or cause the image signal to be rendered by the display (203).

8. The smart speaker (100) of claim 7, wherein the control unit (120) is configured to
- receive the image signal, notably a video signal, from an electronic device via a communication interface of the smart speaker (100); and
- cause the image signal, notably the video signal, to be rendered by the display (203) to output a hologram (200) which corresponds to the image signal, notably to the video signal.

9. The smart speaker (100) of any previous claims, wherein
- the main body (106) forms a cylinder, notably a circular cylinder, around the longitudinal axis; and/or
- the main body (106) extends between 10cm and 25cm along the longitudinal axis; and/or
- the main body (106) exhibits a diameter between 4cm and 8cm; and/or
- the loudspeaker (108) is located at a base of the cylinder.

10. The smart speaker (100) of any previous claims, wherein
- the smart speaker (100) comprises a front foot plate (105) extending downwards along a front foot axis from the main body (106) towards the ground that the smart speaker (100) stands on when the smart speaker is deployed; wherein the front foot plate (105) lies within a plane defined by the longitudinal axis and the front foot axis; and
- the display (203) is located between the rear foot plate (111) and the front foot plate (105).

11. The smart speaker (100) of any previous claims, wherein the smart speaker (100) comprises
- a gesture sensor (104), notably located at the main body (106), configured to sense gesture data regarding a gesture performed by a user of the smart speaker (100); and
- a control unit (120) configured to control rendering of a hologram (200) in dependence on the gesture data.
